# EUROPEAN PATENT APPLICATION

(11) **EP 4 501 626 A1**
(43) Date of publication of application: **05.02.2025**
(21) Application number: 24189585.3
(22) Date of filing: 18.07.2024
(51) Int. Cl.: B32B 18/00, C04B 35/52, C04B 35/83, C04B 38/00

(54) **POROSITY GRADIENT PREFORM ARCHITECTURE FOR HIGH TEMPERATURE COMPOSITES**

(30) Priority: 21.07.2023 US 202318356953
(71) Applicant: Rohr, Inc., Chula Vista, CA 91910-2098 (US)
(72) Inventor: THAI, Bryan, Poway (US); PUJAR, Vijay V., San Diego (US); WAUGH, Katherine E., Coronado (US); KOROLY, Christopher C., Spring Valley (US)
(74) Representative: Dehns

(57) **Abstract**

A porosity gradient fibrous preform (100) includes at least one first fabric-resin layer (102) and a second fabric-resin layer (104), each including a plurality of fibers (112) and a resin (114). The second fabric-resin layer (104) is positioned on top of the at least one first fabric-resin layer (102). A weight ratio percentage of the resin (114) sequentially decreases from a center of the porosity gradient fibrous preform (100) toward an outer surface of the porosity gradient fibrous preform to create a path through the porosity gradient fibrous preform (100) for infiltration of a fluid.

## Description

### FIELD

The present invention relates generally to apparatus, systems, and methods of manufacture for composite preform components and, more particularly, to a fibrous preform architecture for high temperature composites.

### BACKGROUND

Shaped composite bodies are utilized in aerospace applications. Various systems and methods are known in the art for forming a preform into a shaped composite body. In typical high temperature composite manufacturing, a dry fabric may be used to make a preform. The dry preform is then densified using gas infiltration. There are many variables that determine the success of the densification stage, including the number of available pathways for the gas to infiltrate uniformly into the center of the preform.

### SUMMARY

According to an aspect of the present invention, a porosity gradient fibrous preform is provided. The porosity gradient fibrous preform includes a plurality of fabric-resin layers, each comprising a plurality of fibers and a resin, and a weight ratio percentage of the resin sequentially decreases from a center of the porosity gradient fibrous preform toward an outer surface of the porosity gradient fibrous preform to create a gradient in a resin content wherein a first fabric-resin layer toward a center of the porosity gradient fibrous preform comprises a higher resin content relative to a second fabric-resin layer toward an outer surface of the porosity gradient preform in a direction normal to the fabric-resin layers.

In various embodiments, a fiber volume of the plurality of fibers for each fabric-resin layer is uniform throughout the plurality of fabric-resin layers. In various embodiments, a fiber volume of the plurality of fibers sequentially decreases with each fabric-resin layer from the center of the porosity gradient fibrous preform toward the outer surface of the porosity gradient fibrous preform. In various embodiments, a cure ply thickness of each fabric-resin layer is the same. In various embodiments, the cure ply thickness increases with each fabric-resin layer from the center of the porosity gradient fibrous preform toward the outer surface of the porosity gradient fibrous preform. In various embodiments, a percentage of the fiber volume is at least 10% by volume of the porosity gradient fibrous preform. In various embodiments, the percentage of the fiber volume is at least 25% by volume of the porosity gradient fibrous preform.

In various embodiments, the resin is configured to be pyrolyzed to create a porosity gradient. Stated differently, the porosity gradient can be formed in response to the porosity gradient fibrous preform undergoing a pyrolysis process. In various embodiments, the porosity gradient creates a path through the porosity gradient fibrous preform for infiltration of a fluid during a densification/CVI process.

In various embodiments, the porosity gradient fibrous preform further includes a solvent mixed with the resin, and a solvent-resin ratio sequentially increases from the center of the porosity gradient fibrous preform toward the outer surface of the porosity gradient fibrous preform, and the gradient corresponds with the weight ratio percentage of the resin. In various embodiments, the porosity gradient corresponds with the weight ratio percentage of the resin.

In various embodiments, a composition of the resin is the same throughout the plurality of fabric-resin layers.

In various embodiments, the plurality of fabric-resin layers includes the first fabric-resin layer having a first portion of the plurality of fibers and a first portion of the resin, and the second fabric-resin layer having a second portion of the plurality of fibers and a second portion of the resin, the second fabric-resin layer being positioned further outward from the center of the porosity gradient fibrous preform than the first fabric-resin layer, and a first weight ratio percentage of the first portion of the resin is greater than a second weight ratio percentage of the second portion of the resin.

In various embodiments, the resin comprises a char yield of greater than 25%.

In various embodiments, each fabric-resin layer of the plurality of fabric-resin layers is a prepreg ply.

In various embodiments, a first weight ratio percentage of an outermost fabric-resin layer of the plurality of fabric-resin layers is less than a second weight ratio percentage of an innermost fabric-resin layer of the plurality of fabric-resin layers.

According to an aspect of the present invention, a manufacturing method is provided. The manufacturing method includes forming a porosity gradient fibrous preform by arranging a plurality of fabric-resin layers, each comprising a plurality of fibers and a resin, so that a weight ratio percentage of the resin sequentially decreases from a center of the porosity gradient fibrous preform toward an outer surface of the porosity gradient fibrous preform, and pyrolyzing the resin from the porosity gradient fibrous preform to create a path through the porosity gradient fibrous preform for infiltration of a fluid.

In various embodiments, a porosity gradient is formed in the porosity gradient fibrous preform in response to pyrolyzing the resin from the porosity gradient fibrous preform.

In various embodiments, a composition of the resin is the same throughout the plurality of fabric-resin layers.

In various embodiments, arranging the plurality of fabric-resin layers includes positioning a second fabric-resin layer over a first fabric-resin layer having a first portion of the plurality of fibers and a first portion of the resin, the second fabric-resin layer having a second portion of the plurality of fibers and a second portion of the resin, the second fabric-resin layer being positioned further outward from the center of the porosity gradient fibrous preform than the first fabric-resin layer.

In various embodiments, a first weight ratio percentage of the first portion of the resin is greater than a second weight ratio percentage of the second portion of the resin. In various embodiments, a first weight ratio percentage of an outermost fabric-resin layer of the plurality of fabric-resin layers is less than a second weight ratio percentage of an innermost fabric-resin layer of the plurality of fabric-resin layers.

In various embodiments, a fiber volume of the plurality of fibers for each fabric-resin layer can be uniform throughout the plurality of fabric-resin layers. In various embodiments, a percentage of the fiber volume is at least 10% by volume of the porosity gradient fibrous preform. In various embodiments, the percentage of the fiber volume is at least 25% by volume of the porosity gradient fibrous preform.

In various embodiments, the resin comprises a char yield of greater than 25%.

The present invention may include any one or more of the individual features disclosed above and/or below alone or in any combination thereof.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

FIG. 1 illustrates a porosity gradient fibrous preform using fiber fabric layers having decreasing resin content, in accordance with various embodiments.
FIG. 2 illustrates a method of forming a porosity gradient fibrous preform for a high temperature composite, in accordance with various embodiments.
FIG. 3 illustrates a micro cross-section picture of a porosity gradient fibrous preform, in accordance with various embodiments.
FIG. 4 illustrates a schematic view a pore of a porosity gradient fibrous preform during a Chemical Vapor Infiltration (CVI) process, in accordance with various embodiments.
FIG. 5 illustrates a micro cross-section picture of a porosity gradient fibrous preform, in accordance with various embodiments.
FIG. 6 illustrates a micro cross-section picture of a porosity gradient fibrous preform, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the invention, it should be understood that other embodiments may be realized and that changes may be made without departing from the scope of the invention. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an," or "the" may include one or more than one and that reference to an item in the singular may also include the item in the plural. Further, all ranges may include upper and lower values and all ranges and ratio limits disclosed herein may be combined.

Various systems and methods are known in the art for generating a fibrous preform for carbon-carbon composites. In typical carbon-carbon manufacturing, a fibrous preform may be manufactured and this fibrous preform may then be densified using gas infiltration. There are many variables that determine the success of the densification stage, including the number of available pathways for the gas to infiltrate uniformly into the center of the fibrous preform. Typically, fiber volume and lack of adequate gas flow paths inhibit uniform densification and yield a component with more than 10 percent porosity.

Disclosed herein are systems and methods for a porosity gradient fibrous preform architecture for high temperature composites that provides numerous pathways for fluids, i.e. uniform gas, infiltration into the center of the porosity gradient fibrous preform during densification. In various embodiments, a resin is deposited at varying weight ratio percentages into fabric layers of, for example, woven fabric layers, non-crimp fabric layers, such as unidirectional or stitched unidirectional, or felt fabric layers. As used herein, "weight ratio percentage" of resin is defined as the ratio of the weight of the resin in a fabric-resin layer (e.g., prepreg) compared to the total weight of said fabric-resin layer. A fibrous preform of the present invention includes several fiber-resin layers and features a porosity gradient wherein the preform has a lower porosity at the center of the preform and sequentially higher porosity in a direction away from the center of the preform toward the outer surface of the preform. The gradient may be generated by a size of pores or a number of pores or both. The pores are interconnected to provide a path for subsequent infiltration. Low porosity implies the space is occupied by a nonporous material-e.g., fiber or resin.

As used herein, a fusible fiber is comprised of one or more polymers with a combined char yield of 25% elemental carbon or greater by weight and a residual mass of less than 1% by weight. As used herein, a fugitive fiber is comprised of one or more polymers with a combined char yield of 5% elemental carbon or less by weight, and a residual mass of less than 1% by weight. As used herein, char yield is defined as the weight of the carbon remaining expressed as a percentage of the total starting weight of the fiber or resin when the fiber material or resin material is heated (or pyrolyzed) in an inert atmosphere (e.g., nitrogen or argon) at temperatures of up to about 1000 degrees Celsius (about 1832 degrees Fahrenheit). As used herein, residual mass is defined as the weight of the fiber remaining expressed as a percentage of the total weight of the starting fiber when the fiber material is heated (or oxidized) in an oxidizing atmosphere (e.g., air, or oxygen) at temperatures of up to about 1000 degrees Celsius (about 1832 degrees Fahrenheit). It should be noted that while a residual mass of 1% or less is preferred in the production of carbon-carbon composite structures for high temperature applications, a residual mass of greater than 1% may be acceptable for certain lower temperature applications or in applications where the excessive residual mass and the associated residues do not adversely impact performance.

In various embodiments, the fabric layers may be stacked, in a near net shape tool, with each successive layer containing the desired resin weight ratio percentages thereby forming a porosity gradient fibrous preform. In various embodiments, the resin content may be varied such that interior plies of the porosity gradient fibrous preform may contain a higher percentage of resin while the exterior plies of the porosity gradient fibrous preform may conversely contain a lower percentage of resin. In various embodiments, during stacking, the fabric layers may be tacked together using a variety of methods, e.g., an adhesive tackifier, a hot iron to locally melt a binder, among others. In various embodiments, as the porosity gradient fibrous preform is stacked, the various fabric layers may be joined through thickness reinforcement (TTR) via needling, tufting, stitching, or z-pinning, using a TTR fiber thread. In various embodiments, once all the fabric layers are stacked, then all the fabric layers are needled, tufted, stitched, or z-pinned together. In various embodiments, as each successive fabric layer is added, then the fabric layers may be needled, tufted, stitched, or z-pinned together. In various embodiments, the needling, tufting, stitching, or z-pinning may penetrate all the fabric layers. In various embodiments, the needling, tufting, stitching, or z-pinning may penetrate only a predefined number of fabric layers. In various embodiments, a number of fabric layers that are needled, tufted, stitched, or z-pinned may vary as the porosity gradient fibrous preform is generated. In various embodiments, once the porosity gradient fibrous preform is completely stacked and needled, the porosity gradient fibrous preform may be placed in a close die mold or vacuum bag tooling and subjected to heat and pressure to consolidate the porosity gradient fibrous preform.

In various embodiments, once consolidation is complete, the porosity gradient fibrous preform may undergo pyrolysis, or heat-treatment in an inert environment (pyrolysis may be alternatively referred to as pyrolyzation), where the resin in the matrix is burned and/or evaporated, leaving behind a carbon char in the matrix to form a porosity gradient preform. In various embodiments, once pyrolysis is complete, the porosity gradient fibrous preform may undergo CVI densification. In various embodiments, once the CVI densification is complete, the porosity gradient fibrous preform may undergo skim cut machining where the surface of the porosity gradient fibrous preform is modified to meet a set of standards for the porosity gradient fibrous preform. In various embodiments, the pyrolysis, CVI densification and skim cutting may be repeated until a desired part density is reached. In various embodiments, once the desired part density is reached, a final machining may be performed on the porosity gradient fibrous preform to meet desired porosity gradient fibrous preform dimensions.

In various embodiments, once the resin is cured, the porosity gradient fibrous preform may undergo pyrolysis where the resin in the matrix is burned and/or evaporated, and the remaining carbon in the matrix forms a porosity gradient preform. In various embodiments, once pyrolysis is complete, the porosity gradient fibrous preform may undergo further densification via CVI densification. In various embodiments, once the CVI densification is complete, the porosity gradient fibrous preform may undergo skim cut machining where the surface of the porosity gradient fibrous preform is modified to meet a set of standards for the porosity gradient fibrous preform. In various embodiments, at least one of polymer infiltration, the pyrolysis, CVI densification and skim cutting may be repeated until a desired part density is reached. In various embodiments, once the desired part density is reached, a final machining may be performed on the porosity gradient fibrous preform to meet desired porosity gradient fibrous preform dimensions.

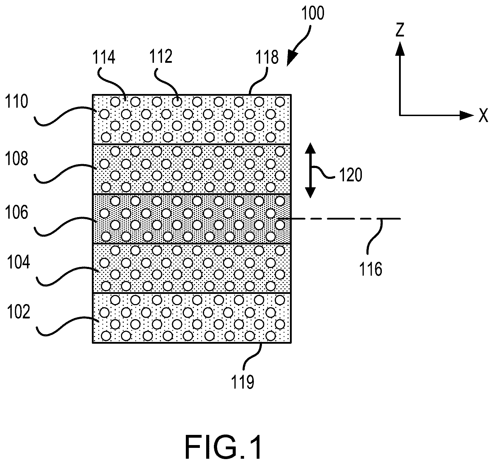

With reference to FIG. 1, in accordance with various embodiments, a porosity gradient fibrous preform 100 using fiber fabric layers having sequentially decreasing resin content is illustrated. In various embodiments, as illustrated in FIG. 1, each of the fabric layers 102, 104, 106, 108, and 110 can have consistent volumes of fibers 112 (e.g., carbon fibers). Stated differently, a fiber volume of the plurality of fibers 112 for each fabric-resin layer 102, 104, 106, 108, and 110 can be uniform throughout the plurality of fabric-resin layers 102, 104, 106, 108, and 110. In various embodiments, fiber volume is greater than 10% of the total volume of the preform 100. In various embodiments, fiber volume is greater than 25% of the total volume of the preform 100. In various embodiments, fiber volume can be between 30% and 50% for carbon-carbon or ceramic matrix composites, and up to 60% for thermoset composites. In various embodiments, the fiber volume of the plurality of fibers 112 for each fabric-resin layer 102, 104, 106, 108, and 110 sequentially decreases with each fabric-resin layer from the center of the preform 100 toward the outer surfaces 118, 119 of the preform 100.

In various embodiments, a cure ply thickness of each fabric-resin layer 102, 104, 106, 108, and 110 is the same. In various embodiments, a cure ply thickness of each fabric-resin layer 102, 104, 106, 108, and 110 sequentially increases with each fabric-resin layer from the center of the preform 100 toward the outer surfaces 118, 119 of the preform 100. For example, a cure ply thickness of each fabric-resin layer 102, 104, 106, 108, and 110 can be varied to tailor a porosity of the fabric-resin layer, where increased cure ply thickness corresponds with increased porosity.

Each of the fabric layers 102, 104, 106, 108, and 110 can have varying weight ratio percentages of resin 114. In this regard, each of the fabric layers 102, 104, 106, 108, and 110 can be referred to herein as fabric-resin layers. Stated differently, each of the fabric layers 102, 104, 106, 108, and 110 include a plurality of fibers 112 and a resin 114. Each of the fabric layers 102, 104, 106, 108, and 110 can include the plurality of fibers 112 pre-impregnated with the resin 114 (i.e., the fibers 112 can be wetted with the resin 114 prior to the layers being stacked). Stated differently, each of the fabric layers 102, 104, 106, 108, and 110 can be made of a composite prepreg ply. The resin 114, in accordance with various embodiments, can be a thermoset resin such as a phenolic resin, an epoxy resin, a vinyl ester resin, a polyester resin, a polyimide resin, a benzoxazine resin, a cyanate ester resin, or a bismaleimide (BMI) resin, among others. The type and/or composition of the resin 114 can be the same for each of the fabric-resin layers 102, 104, 106, 108, and 110. The resin 114 in each of the fabric-resin layers 102, 104, 106, 108, and 110 can have the same char yield. The resin 114 can have a char yield of 25% elemental carbon or greater by weight.

In various embodiments, the resin content (i.e., the weight ratio percentage of the resin 114) sequentially decreases in a direction from a centerline 116 of the preform 100 toward an outer surface 118 (and similarly toward an opposing outer surface 119) of the preform 100 along the thickness direction 120 to create a path through the porosity gradient fibrous preform for infiltration of a fluid, as described in further detail herein. Stated differently, a weight ratio percentage of the resin 114 sequentially decreases from a center of the porosity gradient fibrous preform 100 toward an outer surface (e.g., outer surface 118 and/or outer surface 119) of the porosity gradient fibrous preform 100. In this manner, a porosity gradient in the porosity gradient fibrous preform corresponds with the weight ratio percentage of the resin (i.e., decreasing weight ratio percentage corresponds with increasing porosity). In various embodiments, the weight ratio percentage of the resin 114 in fabric layer 106 is greater than the weight ratio percentages of the resin 114 in fabric layers 104 and 108. In various embodiments, the weight ratio percentages of the resin 114 in fabric layers 104 and 108 are greater than the weight ratio percentages of the resin 114 in fabric layers 102 and 110. By decreasing the weight ratio percentage of the resin 114 near the exterior of the porosity gradient fibrous preform 100, a porosity of the porosity gradient fibrous preform 100 increases-e.g., during or after a pyrolysis process as described herein-near the exterior of the porosity gradient fibrous preform 100 to thereby allow a fluid to infiltrate the interior of the porosity gradient fibrous preform 100 during a CVI process, as described herein, and thereby achieve more uniform and/or increased part density.

In various embodiments, the weight ratio percentage of the resin 114 is varied and the fiber volume remains uniform throughout the layers, by creating voids (e.g., air pockets) in the resin 114. For example, a solvent (e.g., toluene, xylene, methyl iso-butyl ketone, n-butyl acetate, or cellosolve acetate, or the like) can be mixed with the resin 114 at increasing solvent-resin ratios from the center of the fibrous preform 100 outward. For example, fabric-resin layer 106 can have a first solvent-resin ratio, fabric-resin layer 104 and/or fabric-resin layer 108 can have a second solvent-resin ratio which is greater than the first solvent-resin ratio, and fabric-resin layer 102 and/or fabric-resin layer 110 can have a third solvent-resin ratio which is greater than the second solvent-resin ratio. The solvent can be evaporated (e.g., at room temperature (70° F) or in response to being heated to a temperature that is greater than room temperature (e.g., the resin cure temperature)), thereby leaving behind voids in the fibrous preform 100 to generate the porosity gradient fibrous preform 100.

Although illustrated as having five fabric layers 102, 104, 106, 108, and 110, it should be understood that any number of fabric layers can be used to form the fibrous preform 100, so long as the fabric layers are chosen to have decreasing resin content from the centerline 116 toward the outer surface 118. In various embodiments, once the desired number of layers has been reached for the preform ply stack, fabric layers 102, 104, 106, 108, and 110 may be joined through thickness reinforcement (TTR) via external needling, tufting, stitching, or z-pinning, among others. In various embodiments, the TTR utilizes a TTR fiber thread that includes fugitive fibers, fusible fibers, and/or carbon fibers. In various embodiments, the TTR is performed in a uniform manner such that a number of needles, tufts, stiches, or z-pins are consistent along a length of the fabric layers 102, 104, 106, 108, and 110 in the x-direction. In various embodiments, a transport depth in the z-direction of the TTR is through all the fabric layers 102, 104, 106, 108, and 110 of the porosity gradient fibrous preform for the length of the porosity gradient fibrous preform in the x-direction. In various embodiments, generating a TTR fibrous preform in this manner takes advantage of random fiber placement for uniform densification in the through thickness direction, while maintaining high in-plane strengths.

In various embodiments, each fabric layer 102, 104, 106, 108, and 110 has a directionality that coincides with the direction of the fibers 112. The directionality of adjacent fabric layers (e.g., fabric layer 106 and fabric layer 108) can be the same, in accordance with various embodiments. The directionality of adjacent fabric layers (e.g., fabric layer 106 and fabric layer 108) can differ, in accordance with various embodiments

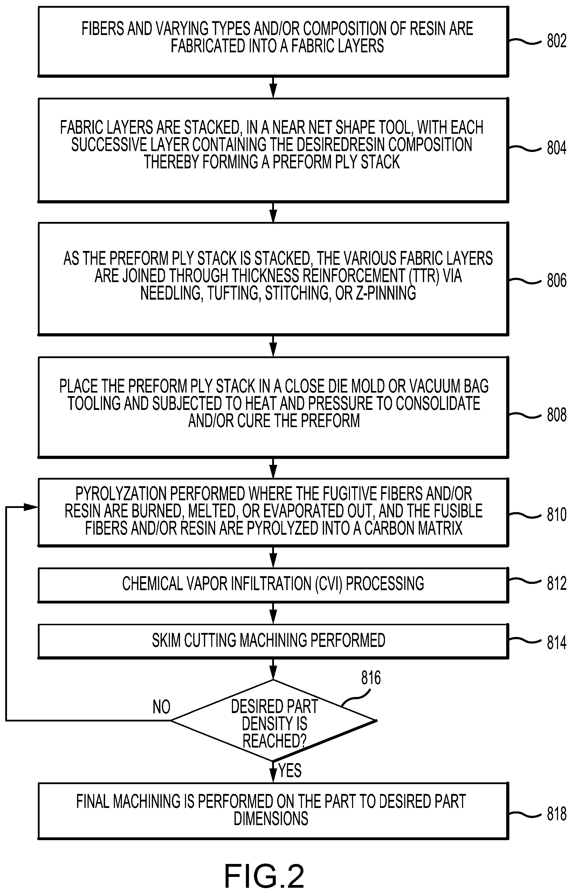

Referring now to FIG. 2, in accordance with various embodiments, a method of forming a porosity gradient fibrous preform for a high temperature composite is illustrated. At block 802, fabric-resin layers using uniform fiber volume and varying percentages, by weight, of resin are fabricated into a fabric-resin layers of either woven fabric layers, non-crimp fabric layers, such as unidirectional or stitched unidirectional, or felt fabric layers. At block 804, the fabric-resin layers are stacked, in a near net shape tool, with each successive layer containing the desired resin percentages thereby forming a porosity gradient fibrous preform. At block 806, as the porosity gradient fibrous preform is stacked, the various fabric layers may be joined through thickness reinforcement (TTR) via needling, tufting, stitching, or z-pinning, using a TTR fiber thread that includes fugitive fibers, fusible fibers, and/or carbon fibers. It should be understood that the TTR step at block 806 is optional and can be omitted in various embodiments. At block 808, once the porosity gradient fibrous preform is completely stacked (and needled if desired), the porosity gradient fibrous preform may be placed in a close die mold or vacuum bag tooling and subjected to heat and pressure to consolidate the porosity gradient fibrous preform. In various embodiments, the resin 114 in the porosity gradient fibrous preform may be cured (e.g., during or after consolidation) by applying heat and pressure to the resin 114. The porosity gradient fibrous preform can be heated to a cure temperature of between 93 °C (200°F) and 121 °C (250°F); though the cure temperature can vary depending on the composition of the resin 114. For example, various thermoset resins may have a cure temperature of between 260°C (500°F) and 371°C (700°F). In this regard, it should be understood that the cure temperate is chosen depending on the type of resin used. Accordingly, the porosity gradient fibrous preform can be heated to a cure temperature of between 93°C (200°F) and 371 °C (700°F), in accordance with various embodiments. After being cured, the resin 114 can be polymerized (i.e., the resin includes monomers before being cured and includes polymers after being cured).

At block 810, once consolidation is complete, the porosity gradient fibrous preform undergoes pyrolysis where a portion of the resin and/or fugitive fibers (if any fugitive fibers exist) in the porosity gradient fibrous preform are burned, melted, or evaporated, and the remaining portion of the resin and the fusible fibers are pyrolyzed into a carbon matrix and create a path through the thickness of the porosity gradient fibrous preform for infiltration of fluids. Subsequent to pyrolysis , the weight ratio percentage of the resin 114 (which at this point is carbon char (i.e., carbon)) in fabric layer 106 can be between 30% and 50%, between 35% and 45%, between 37% and 43%, or between 35% and 50%, in accordance with various embodiments. In various embodiments, the weight ratio percentage of the resin 114 (which at this point is carbon char (i.e., carbon)) in fabric layer 104 and/or fabric layer 108 is between 25% and 40%, between 28% and 38%, or between 30% and 35%, in accordance with various embodiments. In various embodiments, the weight ratio percentage of the resin 114 (which at this point is carbon char (i.e., carbon)) in fabric layer 102 and/or fabric layer 110 is between 20% and 35%, between 20% and 30%, or between 20% and 28%, in accordance with various embodiments.

At block 812, once pyrolysis is complete, the porosity gradient fibrous preform may undergo CVI densification. At block 814, once the CVI densification is complete, the porosity gradient fibrous preform may undergo skim cut machining where the surface of the porosity gradient fibrous preform modified to meet a set of standards for the porosity gradient fibrous preform. At block 816 a determination is made as to whether a desired part density is reached. If at block 816 the desired part density has not been reached, the operation returns to block 812. If at block 816 the desired part density has been reached, then, at block 818, a final machining may be performed on the porosity gradient fibrous preform to meet desired porosity gradient fibrous preform dimensions.

Therefore, the illustrative embodiments provide for the creation of complex contour fibrous preforms, with a variety of thicknesses, which take advantage of porosity gradient created by varying resin content. The porosity gradient preform construction of the present invention tends to improve part quality and make the CVI process more effective. The porosity gradient tends to enable higher densification yields in thick sections or complex contour geometries.

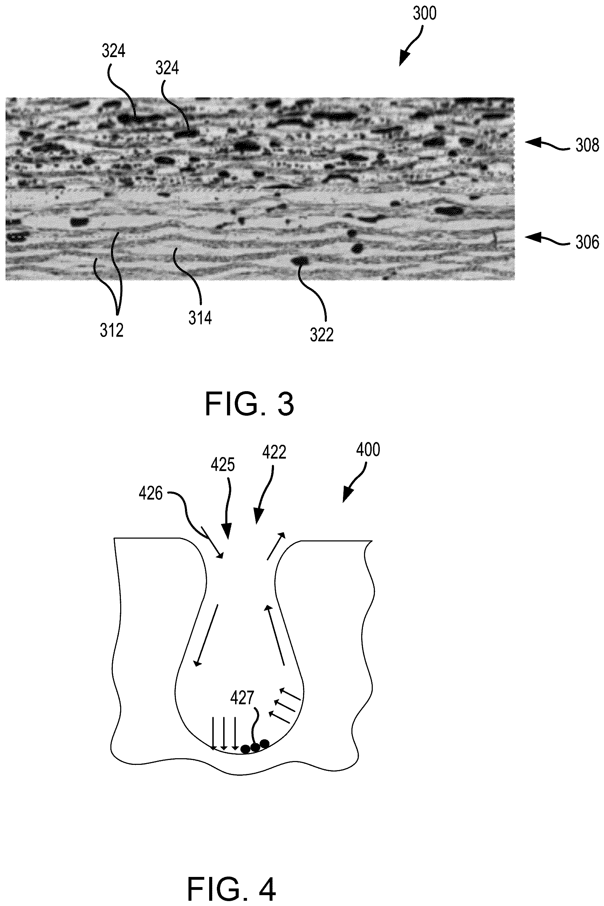

With reference to FIG. 3, a micro cross-section picture of a porosity gradient fibrous preform 300 manufactured using the systems and methods of the present invention (before undergoing CVI) is illustrated having uniform fiber volume and also having a porosity gradient. Porosity gradient fibrous preform 300 includes a carbon or ceramic matrix 314 reinforced with carbon or reinforcement fibers 312. The carbon or ceramic matrix 314 can be the product of a resin (e.g., see resin 114 of FIG. 1) after undergoing curing and pyrolysis. The carbon fibers 312 can be the product of the fibers (e.g., see fibers 112 of FIG. 1) after undergoing pyrolysis. Due to the varying weight ratio percentages of the resin in the layers of the porosity gradient preform, a porosity of a first carbonized fabric-resin layer 306 near a center of the preform is less than a porosity of a second carbonized fabric-resin layer 308 near an outer surface of the preform. Stated differently, layer 308 includes a first plurality of pores 324 that create one or more paths through the porosity gradient fibrous preform for infiltration of a fluid (e.g., a fluid used during CVI for densification). Layer 306 includes a second plurality of pores 322 that create one or more paths through the porosity gradient fibrous preform for infiltration of a fluid (e.g., a fluid used during CVI for densification). The pores 324 can be in fluid communication with the pores 322 whereby a network of paths are created for receiving a fluid used during CVI densification. A volume of the first plurality of pores 324 is greater than a volume of the second plurality of pores 322. Stated differently, the layer 306 is less porous than the layer 308. Accordingly, the network of paths creates the porosity gradient.

With momentary reference to FIG. 4, a portion of a porosity gradient fibrous preform 400 is illustrated having a pore 422 defining a path 425 for a fluid-illustrated by the arrows 426-to infiltrate the porosity gradient fibrous preform 400. Accordingly, the pores are interconnected across the fabric-resin layers such that, in response to the resin being pyrolyzed, the path 425 is created through the fabric-resin layers to allow a fluid (e.g., a CVI gas) to infiltrate through the thickness (e.g., the entire thickness) of the porosity gradient fibrous preform 300. The fluid 426 can be a hydrocarbon gas configured to infiltrate the preform at elevated temperatures (e.g., approximately 1000°C (1832°F), wherein the term "approximately in this regard means ±200°C (between 1472°F-2192°F)), whereby carbon 427 from the hydrocarbon gases separate from the gas and is deposited on and within the porosity gradient fibrous preform 400. In this regard, it should be appreciated that the increased porosity located near the outside surface of the porosity gradient fibrous preform results in additional paths whereby the fluid (e.g., hydrocarbon gases) can reach the interior of the porosity gradient fibrous preform to deposit carbon. As the porosity of the porosity gradient fibrous preform is decreased in the interior of the porosity gradient fibrous preform due to the deposited carbon during CVI, the fluid continues to fill the pores located near the outside surface of the porosity gradient fibrous preform, similarly decreasing porosity near the exterior of the porosity gradient fibrous preform, thereby resulting in an overall uniformly higher density carbon-carbon component than if the porosity gradient hadn't existed in the first place. Stated differently, and with momentary additional reference to FIG. 3, during CVI, the pores 324 are not filled (or otherwise clogged from allowing CVI gasses to infiltrated the interior of the porosity gradient fibrous preform) with carbon deposited by the CVI fluid 426 until after the interior of the porosity gradient fibrous preform reaches a desired density. In this manner, the porosity gradient fibrous preform allows for uniform densification by providing additional pathways for the CVI gasses to reach the interior of the porosity gradient fibrous preform.

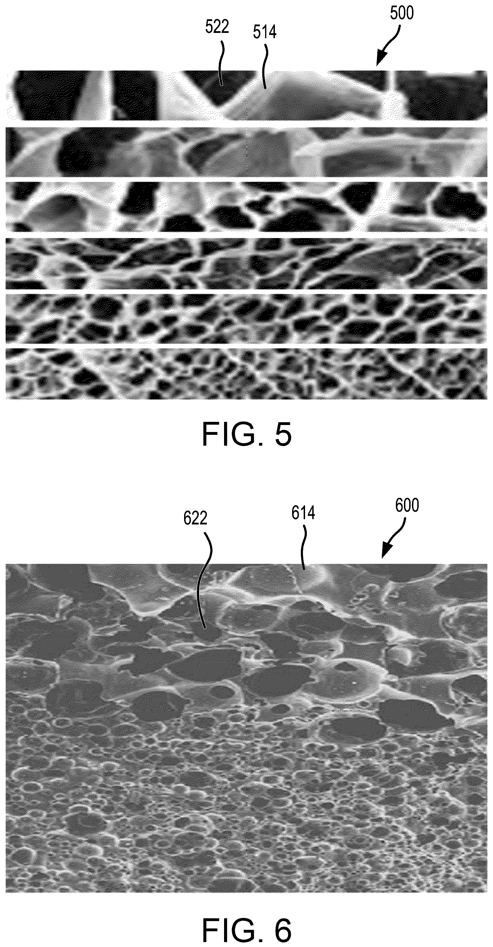

With reference to FIG. 5, a micro cross-section picture of a porosity gradient fibrous preform 500 manufactured using the systems and methods of the present invention (before undergoing CVI) is illustrated having uniform fiber volume and also having a porosity gradient. Preform 500 includes a plurality of layers of varying porosities. Preform 500 includes a carbon matrix 514 defining a plurality of pores 522.

With reference to FIG. 6, a micro cross-section picture of a porosity gradient fibrous preform 600 manufactured using the systems and methods of the present invention (before undergoing CVI) is illustrated having uniform fiber volume and also having a porosity gradient. Preform 600 includes a plurality of layers of varying porosities. Preform 600 includes a carbon matrix 614 defining a plurality of pores 622.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the invention. The scope of the invention is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods, and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the invention in alternative embodiments.

Numbers, percentages, or other values stated herein are intended to include that value, and also other values that are about or approximately equal to the stated value, as would be appreciated by one of ordinary skill in the art encompassed by various embodiments of the present invention. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about," or "approximately" as used herein represent an amount close to the stated amount that still performs a desired function or achieves a desired result. For example, the term "substantially," "about," or "approximately" may refer to an amount that is within 10% of, within 5% of, within 1% of, within 0.1% of, and within 0.01% of a stated amount or value.

Furthermore, no element, component, or method step in the present invention is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

Finally, it should be understood that any of the above-described concepts can be used alone or in combination with any or all of the other above-described concepts. Although various embodiments have been disclosed and described, one of ordinary skill in this art would recognize that certain modifications would come within the scope of this invention. Accordingly, the description is not intended to be exhaustive or to limit the principles described or illustrated herein to any precise form. Many modifications and variations are possible in light of the above teaching.

## Claims

1. A porosity gradient fibrous preform comprising:
a plurality of fabric-resin layers, each comprising a plurality of fibers and a resin; and
a weight ratio percentage of the resin sequentially decreases from a center of the porosity gradient fibrous preform toward an outer surface of the porosity gradient fibrous preform to create a gradient in a resin content wherein a first fabric-resin layer toward a center of the porosity gradient fibrous preform comprises a higher resin content relative to a second fabric-resin layer toward an outer surface of the porosity gradient preform in a direction normal to the fabric-resin layers.

2. The porosity gradient fibrous preform of claim 1, wherein the resin is configured to be pyrolyzed to create a porosity gradient, wherein a first porosity toward the center of the preform is lower than a second porosity toward the outer surface of the preform in the direction normal to the fabric-resin layers, and/or
wherein the resin comprises a char yield of greater than 25%.

3. The porosity gradient fibrous preform of claim 1 or 2, further comprising a solvent mixed with the resin, and a solvent-resin ratio sequentially increases from the center of the porosity gradient fibrous preform toward the outer surface of the porosity gradient fibrous preform, and the gradient corresponds with the weight ratio percentage of the resin.

4. The porosity gradient fibrous preform of claim 2 or 3, wherein the porosity gradient creates a path through the porosity gradient fibrous preform for infiltration of a fluid during a densification process.

5. The porosity gradient fibrous preform of any preceding claim, wherein a composition of the resin is the same throughout the plurality of fabric-resin layers.

6. The porosity gradient fibrous preform of any preceding claim, wherein the plurality of fabric-resin layers includes the first fabric-resin layer having a first portion of the plurality of fibers and a first portion of the resin, and the second fabric-resin layer having a second portion of the plurality of fibers and a second portion of the resin, the second fabric-resin layer being positioned further outward from the center of the porosity gradient fibrous preform than the first fabric-resin layer; and
a first weight ratio percentage of the first portion of the resin is greater than a second weight ratio percentage of the second portion of the resin.

7. The porosity gradient fibrous preform of any preceding claim, wherein a percentage of a fiber volume of the plurality of fibers for each fabric-resin layer is at least 25% by volume of the porosity gradient fibrous preform.

8. The porosity gradient fibrous preform of any preceding claim, wherein a fiber volume of the plurality of fibers for each fabric-resin layer is uniform throughout the plurality of fabric-resin layers.

9. The porosity gradient fibrous preform of any preceding claim, wherein each fabric-resin layer of the plurality of fabric-resin layers is a prepreg ply.

10. The porosity gradient fibrous preform of any preceding claim, wherein a first weight ratio percentage of an outermost fabric-resin layer of the plurality of fabric-resin layers is less than a second weight ratio percentage of an innermost fabric-resin layer of the plurality of fabric-resin layers.

11. A manufacturing method, comprising:
forming a porosity gradient fibrous preform by:
arranging a plurality of fabric-resin layers, each comprising a plurality of fibers and a resin, so that a weight ratio percentage of the resin sequentially decreases from a center of the porosity gradient fibrous preform toward an outer surface of the porosity gradient fibrous preform; and
pyrolyzing the resin from the porosity gradient fibrous preform to create a path through the porosity gradient fibrous preform for infiltration of a fluid.

12. The manufacturing method of claim 11, wherein a porosity gradient is formed in the porosity gradient fibrous preform in response to pyrolyzing the resin from the porosity gradient fibrous preform, and/or
wherein a composition of the resin is the same throughout the plurality of fabric-resin layers.

13. The manufacturing method of claims 11 or 12, wherein arranging the plurality of fabric-resin layers includes positioning a second fabric-resin layer over a first fabric-resin layer having a first portion of the plurality of fibers and a first portion of the resin, the second fabric-resin layer having a second portion of the plurality of fibers and a second portion of the resin, the second fabric-resin layer being positioned further outward from the center of the porosity gradient fibrous preform than the first fabric-resin layer.

14. The manufacturing method of claim 13, wherein a first weight ratio percentage of the first portion of the resin is greater than a second weight ratio percentage of the second portion of the resin, and/or
wherein a first weight ratio percentage of an outermost fabric-resin layer of the plurality of fabric-resin layers is less than a second weight ratio percentage of an innermost fabric-resin layer of the plurality of fabric-resin layers, and/or
wherein a percentage of a fiber volume of the plurality of fibers for each fabric-resin layer is at least 25% by volume of the porosity gradient fibrous preform.

15. The manufacturing method of any of claims 11 to 14, wherein a fiber volume of the plurality of fibers for each fabric-resin layer is uniform throughout the plurality of fabric-resin layers, and/or
wherein the resin comprises a char yield of greater than 25%.
